# DEMANDE DE BREVET EUROPEEN

(11) **EP 3 068 116 A1**
(43) Date de publication de la demande: **14.09.2016**
(21) Numéro de dépôt: 15158715.1
(22) Date de dépôt: 11.03.2015
(51) Int. Cl.: H04M 1/725, G06Q 20/32, G07C 9/00

(54) **Ensemble de terminaux connectés pour la programmation et la gestion d'une sélection de fonctions**

(71) Demandeur: EM Microelectronic-Marin SA, 2074 Marin (CH)
(72) Inventeur: Hayek, Georges Nicolas, 8032 Zürich (CH); Willemin, Michel, 2515 Prêles (CH); Martin, Jean-Claude, 2037 Montmollin (CH); Gyger, Thomas, 2316 Les-Ponts-de-Martel (CH)
(74) Mandataire: Tournel, Maxime Jean-Joseph

(57) **Abrégé**

La présente invention concerne un ensemble (1) comprenant un terminal principal (T1) muni d'un module communication (14), utilisant au moins un premier protocole de communication (P1), apte à connecter ledit terminal principal à un réseau de communication (100) permettant l'utilisation d'au moins une fonction, ledit terminal principal étant agencé pour utiliser au moins un programme de configuration (PCONF), le programme de configuration (PCONF) permettant de sélectionner au moins une fonction préférentielle (FCTi) et de générer un code représentatif de la fonction préférentielle sélectionnée (CODEi), et un second protocole de communication (P2), ledit ensemble comprenant en outre au moins un terminal secondaire (T2) muni d'un module de communication passif (20) utilisant le second protocole de communication (P2) pour communiquer avec ledit terminal principal de sorte à sauvegarder le code représentatif de la fonction préférentielle sélectionnée (CODEi).

## Description

La présente invention concerne un ensemble comprenant un terminal principal muni d'un module de communication, utilisant au moins un premier et un second protocole de communication, apte à connecter ledit terminal principal à un réseau de communication permettant l'utilisation d'au moins une fonction, ledit terminal principal étant agencé pour utiliser au moins un programme de configuration d'un terminal secondaire.

### ART ANTERIEUR

Il est connu des objets portables connectés permettant d'opérer plusieurs fonctions. Un type d'objet portable utilisé est typiquement un téléphone mobile muni d'un module de communication apte à utiliser en plus de la communication mobile (3G, 4G, LTE,...) plusieurs protocoles de communication tels que le protocole Wi-Fi, le protocole Bluetooth ou le protocole NFC. Ces téléphones mobiles peuvent alors être utilisés pour opérer des fonctions dites connectées telles que le paiement sans contact, la billetterie électronique ou de l'accès sans contact.

Toutefois, un inconvénient de ce type de fonctionnement est qu'il est nécessaire que le téléphone mobile soit actif. En effet, ce dernier fonctionne généralement sur une batterie de sorte que si la batterie est déchargée, les fonctions dites connectées deviennent alors inutilisables.

Un autre type d'objet connecté concerne des montres utilisées pour le paiement sans contact. Un tel objet consiste en une montre dans laquelle un circuit électronique intégré (puce) spécifique à la fonction paiement est agencé. Cette puce de paiement peut être mise à disposition par l'institut bancaire placée sur un support que l'on vient ensuite insérer dans un logement spécifique du produit, ou alors une puce vierge placée directement dans le produit et programmée ensuite par l'institut bancaire.

Ainsi, le fait d'avoir une puce de paiement qui s'insère dans un logement présente l'inconvénient d'une possible perte d'étanchéité alors que le fait d'avoir une puce programmée par un institut bancaire implique une logistique importante, la montre devant être envoyée à l'institut bancaire retardant donc le moment où l'acheteur peut s'en servir.

### RESUME DE L'INVENTION

La présente invention cherche donc à fournir un objet portable connecté qui soit facile à programmer tout en étant toujours disponible.

A cet effet, la présente invention concerne un ensemble comprenant un terminal principal muni d'un module communication, utilisant au moins un premier protocole de communication, apte à connecter ledit terminal principal à un réseau de communication permettant l'utilisation d'au moins une fonction, ledit terminal principal étant agencé pour utiliser au moins un programme de configuration, le programme de configuration permettant de sélectionner au moins une fonction préférentielle et de générer un code représentatif de la fonction préférentielle sélectionnée, et un second protocole de communication, ledit ensemble comprenant en outre au moins un terminal secondaire muni d'un module de communication passif utilisant le second protocole de communication pour communiquer avec ledit terminal principal de sorte à sauvegarder le code représentatif de la fonction préférentielle sélectionnée, et dans lequel ledit terminal secondaire est agencé pour être réveillé et activé par une source d'énergie externe provenant d'un autre terminal utilisant également le second protocole de communication et pour envoyer, en réponse à cette activation, une commande à cet autre terminal afin qu'il opère la fonction préférentielle lorsque le terminal secondaire est à portée de communication de cet autre terminal.

Dans un premier mode de réalisation avantageux, le terminal avec lequel le terminal secondaire communique est le terminal principal.

Dans un second mode de réalisation avantageux, le terminal avec lequel le terminal secondaire communique est un terminal tertiaire muni d'un circuit de communication utilisant le second protocole de communication.

Dans un troisième mode de réalisation avantageux, le terminal avec lequel le terminal secondaire communique est un terminal secondaire, un terminal auxiliaire muni d'un circuit de communication actif utilisant le second protocole de communication est utilisé comme intermédiaire.

Dans un quatrième mode de réalisation avantageux, le terminal secondaire communique est avec un terminal secondaire, chaque terminal secondaire étant muni d'un circuit d'alimentation additionnel pour le module de communication passif.

Dans un cinquième mode de réalisation avantageux, la fonction préférentielle est une fonction d'affichage d'information.

Dans un sixième mode de réalisation avantageux, la fonction préférentielle est une fonction de déclenchement d'une application.

Dans un septième mode de réalisation avantageux, la fonction préférentielle est une fonction de déclenchement d'une action (accès, ouverture de porte,...).

Dans un autre mode de réalisation avantageux, le premier protocole de communication est un protocole choisi dans la liste comprenant entre autres les protocoles Bluetooth, GSM, EDGE, UMTS, CDMA, LTE, HSPA, xDSL ou Wi-Fi.

Dans un autre mode de réalisation avantageux, le second protocole de communication est tout protocole apte à être utilisé dans un module de communication passif.

Dans un autre mode de réalisation avantageux, le second protocole est le protocole NFC.

Dans un autre mode de réalisation avantageux, le terminal principal comprend des moyens d'affichage et des moyens de commande et est un terminal choisi dans la liste suivante : téléphone mobile ou smartphone, ordinateur ou portable, tablette électronique ou tout appareil apte à utiliser ledit programme de configuration.

Dans un autre mode de réalisation avantageux, le terminal secondaire est un terminal choisi dans la liste comprenant : montre, bracelet, bijou, clip ou autre bracelet.

Dans un autre mode de réalisation avantageux, le terminal secondaire comprend des moyens d'affichage et des moyens de commande.

Dans un autre mode de réalisation avantageux, le terminal opérant la fonction préférentielle peut être tout appareil muni d'un circuit de communication utilisant le second protocole, ledit circuit de communication étant un circuit interne audit appareil ou un circuit externe connecté audit appareil via une liaison filaire.

Dans un autre mode de réalisation avantageux, le terminal secondaire et le terminal principal sont du même type de sorte à former un terminal unique, ledit terminal unique comprenant ainsi un module de communication utilisant au moins le premier protocole et un circuit de communication passif utilisant le second protocole de communication.

L'invention concerne également une méthode de gestion de fonctions préférentielles d'un ensemble comprenant un terminal principal muni d'un module communication, utilisant au moins un premier et un second protocole de communication, apte à connecter ledit terminal principal à un réseau de communication permettant l'utilisation d'au moins une fonction, ledit terminal principal étant agencé pour utiliser au moins un programme de configuration, ledit ensemble comprenant en outre au moins un terminal secondaire muni d'un circuit de communication passif utilisant le second protocole de communication, ladite méthode comprenant les étapes suivantes :
- utiliser le terminal principal pour se connecter au réseau de communication via le programme de configuration;
- sélectionner au moins une fonction préférentielle via le programme de configuration;
- générer un code représentatif de la fonction préférentielle sélectionnée;
- transférer ce code représentatif de la fonction préférentielle sélectionnée vers la zone mémoire du circuit de communication du terminal secondaire en utilisant le module de communication dudit terminal principal.

Dans un mode de réalisation avantageux, après le transfert du code représentatif de la fonction préférentielle sélectionnée vers la zone mémoire du circuit de communication du terminal secondaire, ladite méthode comprend en outre l'étape consistant à, lorsque le terminal secondaire est approché d'un terminal muni d'un circuit de communication utilisant le second protocole, envoyer une commande liée à ladite fonction préférentielle de sorte que le terminal recevant cette commande puisse exécuter la fonction.

### DESCRIPTION DES DESSINS

D'autres caractéristiques et avantages de l'invention apparaîtront à la lecture de la description détaillée qui va suivre, en référence aux dessins annexés, où :
- Les figures 1 et 2 représentent une vue schématique d'un premier mode de réalisation de l'ensemble selon l'invention ;
- La figure 3 représente un cas particulier du premier mode de réalisation de l'ensemble selon l'invention ;
- Les figures 4 et 5 représentent une vue schématique d'un second mode de réalisation de l'ensemble selon l'invention ;
- La figure 6 représente une variante du second mode de réalisation ;

### DESCRIPTION DÉTAILLÉE

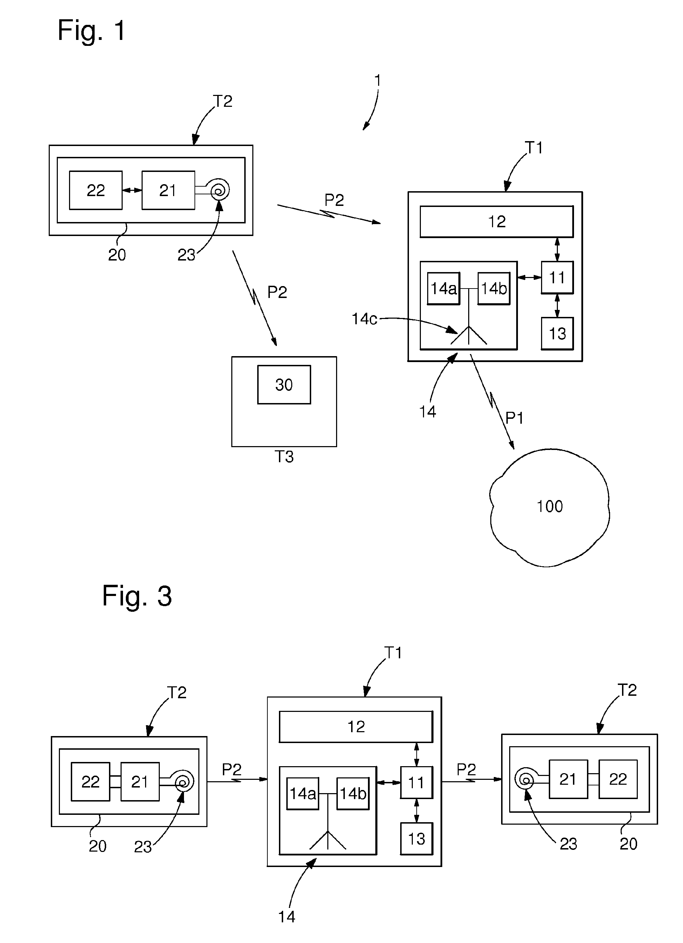

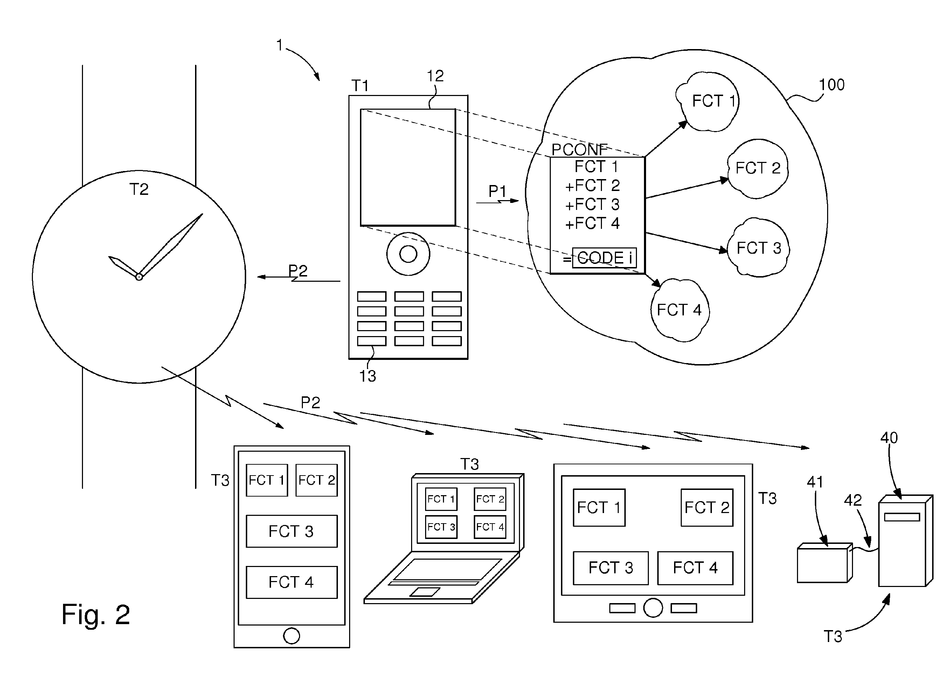

La présente invention est représentée schématiquement aux figures 1 et 2. Un tel ensemble 1 comprend en premier lieu un terminal principal T1. Ce terminal principal comprend une unité de calcul 11 gérant des moyens d'affichage 12 tel qu'un écran LCD et des moyens de commande 13 comme des touches tactiles ou non. L'unité de calcul 11 est également utilisée pour gérer un module de communication 14.

Ce module de communication 14 comprend un circuit émetteur-récepteur muni d'au moins deux interfaces de communication distinctes 14a, 14b et au moins une antenne 14c, chaque interface utilisant un protocole de communication. Par exemple, une première interface 14a utilisera un premier protocole P1 du type Bluetooth, GSM, EDGE, UMTS, CDMA, LTE, HSPA, xDSL ou Wi-Fi alors que la seconde interface 14b utilisera un second protocole P2 du type NFC ou RFID. Bien entendu, il est possible que le module de communication ait une autre interface utilisant un protocole du type Wi-Fi.

Ce terminal principal T1 peut se présenter sous la forme d'un téléphone mobile ou d'un ordinateur ou d'une tablette informatique tactile ou autre.

Le module communication 14 du terminal principal T1 permet d'avoir accès à un réseau de communication 100. Un tel réseau est par exemple le réseau internet ou un réseau interne. Ce réseau de communication 100 permet à l'utilisateur d'avoir accès à un certain nombre de fonctions FCTi. Un type de fonction FCTi est une fonction d'information. Cette fonction FCTi d'information permet à l'utilisateur d'avoir accès à une multitude d'informations c'est-à-dire d'avoir accès à des pages spécialisées comme des sites internet ou alors être capable de récupérer des informations. Sur la figure 2, on voit que le programme PCONF permet l'accès à quatre fonctions FCT1, FCT2, FCT3 et FCT4.

Il existe bien sûr d'autres fonctions FCTi comme par exemple la fonction paiement permettant à l'utilisation de payer des articles ou une fonction configuration permettant à l'utilisateur de programmer une configuration telle que celle de sa voiture ou celle de sa maison ou une configuration hôtelière avec accès personnalisé suivant la formule payée.

Ainsi, le terminal principal T1 est alors agencé pour utiliser un programme de configuration PCONF via les moyens d'affichage 12 et les moyens de commande 13. Un tel programme de configuration PCONF sert d'intermédiaire entre le terminal principal T1 et le réseau de communication 100 et peut être une application directement installée sur le terminal principal ou un programme directement implanté dans le réseau de communication 100. Le terminal principal est donc un appareil apte à utiliser ledit programme de configuration.

Il peut être prévu que le programme de configuration PCONF soit une interface unique pour toutes les fonctions ou un noyau pouvant être intégré sur différentes plateformes. On pourra par exemple prévoir que les sites de réservation d'hôtel ou les sites de paiement soient munis de ce programme de configuration. De même, il peut être envisagé que l'utilisateur puisse se connecter via un mot de passe ou que la connexion puisse se faire via un identifiant qui est l'identifiant du terminal principal T1.

Ce programme de configuration PCONF est ainsi utilisé par l'utilisateur pour que celui-ci puisse faire une sélection. Cette sélection est réalisée pour regrouper des informations importantes pour l'utilisateur. Ces informations peuvent être son abonnement de transport en commun, les infos météo, les news ou les résultats sportifs ou alors des possibilités de paiement ou des fonctions telles que l'ouverture de porte sécurisée ou la configuration d'appareil.

Une fois la sélection achevée, le programme de configuration PCONF compile ces différentes fonctions pour générer un code CODEi ou clé représentatif de la sélection.

Avantageusement selon l'invention, l'ensemble 1 comprend en outre un terminal secondaire T2. Ce terminal secondaire T2 comprend au minimum un module de communication 20 muni d'une interface utilisant un protocole apte à permettre l'envoi d'un signal pour la communication entre ledit terminal secondaire T2 et le terminal principal T1. Préférentiellement, le protocole utilisé sera identique au second protocole P2 utilisé par la seconde interface 14b du terminal principal T1. Ce module de communication comprend donc un circuit émetteur-récepteur 21, une zone mémoire 22 pour le stockage d'informations et une antenne 23. Préférentiellement, le module de communication 20 du terminal secondaire, c'est-à-dire le circuit émetteur-récepteur 21, sera du type passif c'est-à-dire que l'énergie nécessaire à son fonctionnement est fournie de l'extérieur par l'appareil qui communique avec lui. Cela permet avantageusement de ne pas se soucier d'un éventuel problème d'autonomie et de pouvoir toujours fonctionner même si le terminal secondaire T2 tombe en panne d'énergie.

L'invention consiste avantageusement à transférer le code ou la clé représentative de la sélection vers la zone mémoire 22 du module de communication 20 du terminal principal T2. Ce transfert est effectué par un signal utilisant le protocole de communication P2 commun entre le terminal principal T1 et le terminal secondaire T2.

Ainsi, lorsque le terminal secondaire T2 arrive à portée de communication avec un autre terminal appelé terminal tertiaire T3 muni d'un module de communication 30 muni d'une interface utilisant le même protocole que le terminal secondaire, de l'énergie est apportée au circuit de communication passif 20 du terminal secondaire T2. Suite à cet apport d'énergie, la zone mémoire 22 se réveille et peut être accédée afin que des données relatives à la sélection soient envoyées par un signal au terminal tertiaire T3.

Toutes les données ne sont pas envoyées, elles sont sélectivement envoyées selon la fonction et selon certaines conditions. En effet, certains terminaux n'ont qu'une seule fonction tels que les terminaux de paiement ou de billetterie électronique alors que les terminaux tels que les téléphones mobiles ou les tablettes tactiles ou ordinateurs sont susceptibles de pouvoir opérer plusieurs fonctions. Ainsi, le terminal tertiaire T3 communiquant avec le terminal secondaire T2 envoie un code d'identification sur la fonction que ledit terminal tertiaire est capable de faire.

En réponse à un signal d'interrogation, le terminal secondaire T2 envoie un signal de commande ordonnant au terminal tertiaire T3 d'exécuter une fonction compatible.

Si ce terminal tertiaire est utilisé pour de la billetterie électronique alors le terminal secondaire T2 enverra la commande liée au billet électronique ou abonnement précédemment acheté et sauvegardé.

Si ce terminal tertiaire est utilisé pour de l'information alors le terminal secondaire T2 envoie une commande liée aux informations favorites de l'utilisateur de sorte que ce terminal tertiaire T3 aille chercher lesdites informations et les affiche. Ces informations peuvent être directement incluses dans le terminal tertiaire T3 telles que l'heure ou alors être récupérées via un réseau de communication du type internet.

Si le terminal tertiaire est utilisé pour configurer d'autres appareils alors le terminal secondaire T2 envoie une commande de configuration pour que le terminal tertiaire T3 configure l'appareil souhaité.

Enfin, si cet autre terminal est utilisé pour faire tourner des applications alors le terminal secondaire T2 envoie une commande liée de sorte que cet autre terminal active la ou les applications.

Le terminal tertiaire T3 pourra être du même type que le terminal principal T1 c'est à dire se présenter sous la forme d'un téléphone mobile ou d'un ordinateur ou d'une tablette informatique tactile. Mais il pourra être aussi tout appareil muni d'un module de communication 30 utilisant le second protocole P2 ou tout appareil 40 auquel est connecté un circuit externe de communication 41 via une connexion filaire 42 comme par exemple un boitier de commande domotique auquel un périphérique de communication est connecté via par exemple une connexion USB ou RS232 ou HDMI ou autres.

Il pourra être prévu que le terminal secondaire puisse communiquer avec un terminal du même type en utilisant un autre terminal comme visible à la figure 3. En effet, comme le terminal secondaire T2 est muni d'un module de communication passif 20, la communication entre deux seconds terminaux T2 ne peut se faire directement. De ce fait, un autre terminal tel que le terminal principal T1 ou autre utilisant un circuit de communication actif c'est-à-dire fournissant lui-même sa propre énergie est nécessaire. Un accessoire connu sous le terme de NFC Booster ou alimentation additionnelle est aussi utilisable pour connecter deux terminaux T2 entre eux temporairement.

Dans un premier mode de réalisation, le terminal secondaire T2 est un appareil distinct que l'utilisateur porte en permanence.

Selon une première solution, le terminal secondaire est une montre. Cette montre comprend un boitier et un bracelet, le boitier étant muni d'un mouvement électronique ou mécanique et des moyens d'affichage et des moyens de commandes. Le module de communication 20 peut être intégré par exemple dans le bracelet ou le boitier. Bien entendu, le circuit de communication peut être intégré dans la glace ou la boucle de bracelet.

Dans une alternative, la montre pourra comprendre des moyens d'affichage permettant d'afficher et de sélectionner la fonction souhaitée pour envoyer la bonne commande.

Selon une seconde solution, le terminal secondaire pourra être un bracelet, un clip ou un bijou de type collier ou broche. Le collier pourra se présenter sous la forme d'un pendentif dans lequel le circuit de communication sera agencé, et d'une chaine. Dans le cas d'un bracelet, des moyens d'affichage pourraient être agencés pour par exemple indiquer que le bracelet est actif.

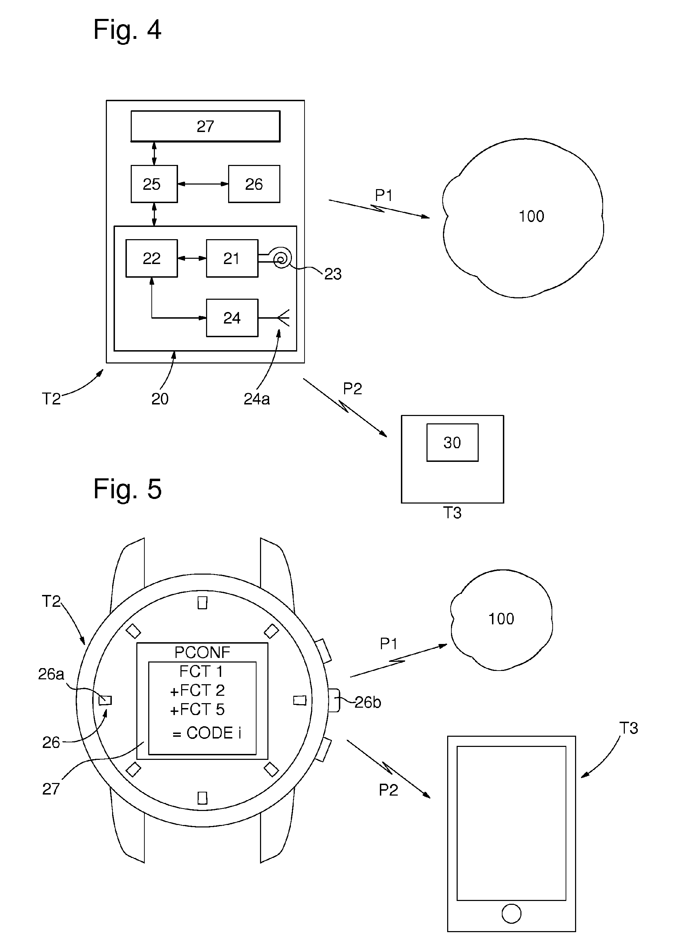

Dans un second mode de réalisation visible aux figures 4 et 5, le terminal principal et le terminal secondaire sont du même type et forme un unique terminal. A ce titre, le terminal secondaire comprend alors une unité de calcul 25 commandant des moyens d'affichage 27 et des moyens de commande 26. Il peut être prévu que le module de communication 20 du terminal secondaire 20 soit également muni d'une interface 24 utilisant un protocole de communication P1 et une antenne 24a permettant d'accéder directement à un réseau de communication 100 via le programme de configuration PCONF. Par exemple, sur la figure 5, la montre T2 sera équipée d'un écran LCD 27, de moyens de commande 26 comme des touches tactiles 26a et des poussoirs 26b et d'un module GSM ou Bluetooth ou Wi-Fi ou autres pour accéder audit réseau de communication. Cette configuration permet de sauvegarder directement la sélection des favoris dans l'appareil que l'utilisateur porte tout le temps.

Dès lors, lorsque l'utilisateur sera à portée d'un autre terminal apte à communiquer avec le module de communication passif du terminal secondaire T2, les fonctions FCTi souhaitées pourront s'activer.

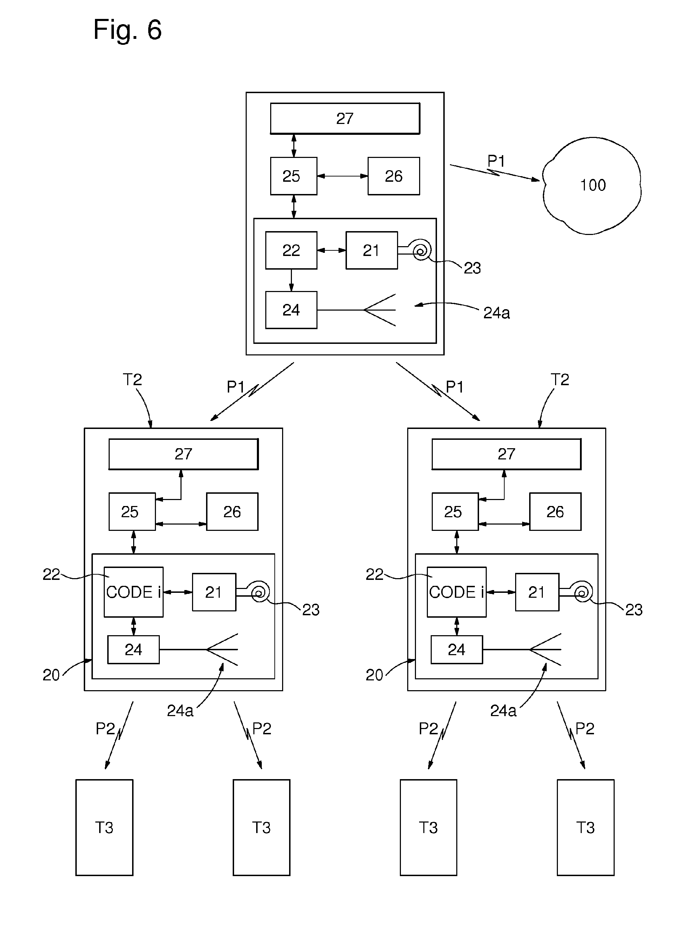

Dans une variante de ce second mode de réalisation visible à la figure 6, le terminal secondaire T2 peut être utilisé dans un environnement de communauté. De ce fait, un administrateur peut utiliser le programme de configuration via un terminal d'administration pour lister les seconds terminaux à portée de communication selon le premier protocole et leur envoyer à chacun un code représentatif d'au moins une fonction, cette fonction pouvant être différente pour chaque terminal secondaire T2 détecté. Par exemple pour une application hôtelière, il pourra être prévu d'attribuer des avantages en termes d'accès gratuits à des activités spécifiques ou l'envoi d'information de promotion à certaines catégories de population spécifique comme les familles ou les bons clients.

Dans une variante des différents modes de réalisation, le terminal secondaire T2 est utilisé dans un environnement communautaire. Ce terminal secondaire T2 peut être utilisé comme moyen de partage. En effet, il peut être prévu d'avoir des fonctions FCTi permettant le partage entre utilisateur. Une telle fonction FCTi peut être liée au partage des privilèges comme par exemple la possibilité de faire profiter de son accès privilégié à un salon ou à un hôtel ou au partage d'argent ou de bons. Par exemple, il est possible de charger un crédit en argent ou en bons d'achats ou en coupons de consommation sur le second terminal T2 et de les transférer sur d'autres terminaux secondaires T2, tertiaires T3 ou principaux T1.

On comprendra que diverses modifications et/ou améliorations et/ou combinaisons évidentes pour l'homme du métier peuvent être apportées aux différents modes de réalisation de l'invention exposés ci-dessus sans sortir du cadre de l'invention définie par les revendications annexées.

## Revendications

1. Ensemble (1) comprenant un terminal principal (T1) muni d'un module communication (14), utilisant au moins un premier protocole de communication (P1), apte à connecter ledit terminal principal à un réseau de communication (100) permettant l'utilisation d'au moins une fonction, ledit terminal principal étant agencé pour utiliser au moins un programme de configuration (PCONF), le programme de configuration (PCONF) permettant de sélectionner au moins une fonction préférentielle (FCTi) et de générer un code représentatif de la fonction préférentielle sélectionnée (CODEi), et un second protocole de communication (P2), ledit ensemble comprenant en outre au moins un terminal secondaire (T2) muni d'un module de communication passif (20) utilisant le second protocole de communication (P2) pour communiquer avec ledit terminal principal de sorte à sauvegarder le code représentatif de la fonction préférentielle sélectionnée (CODEi), et dans lequel ledit terminal secondaire est agencé pour être réveillé et activé par une source d'énergie externe provenant d'un autre terminal utilisant également le second protocole de communication (P2) et pour envoyer, en réponse à cette activation, une commande à cet autre terminal afin qu'il opère la fonction préférentielle lorsque le terminal secondaire (T2) est à portée de communication de cet autre terminal.

2. Ensemble selon la revendication 1, **caractérisé en ce que** le terminal avec lequel le terminal secondaire (T2) communique est le terminal principal (T1).

3. Ensemble selon la revendication 1, **caractérisé en ce que** le terminal avec lequel le terminal secondaire (T2) communique est un terminal tertiaire (T3) muni d'un circuit de communication (30) utilisant le second protocole de communication (P2) de manière active.

4. Ensemble selon la revendication 1, **caractérisé en ce que** le terminal secondaire (T2) communique est avec un terminal secondaire (T2), un terminal intermédiaire muni d'un circuit de communication actif utilisant le second protocole de communication (P2) est utilisé.

5. Ensemble selon la revendication 1, **caractérisé en ce que** le terminal secondaire (T2) communique est avec un terminal secondaire (T2), chaque terminal secondaire (T2) étant muni d'un circuit d'alimentation additionnel pour le module de communication passif (20).

6. Ensemble selon l'une des revendications précédentes, **caractérisé en ce que** la fonction préférentielle (FCTi) est une fonction d'affichage d'information.

7. Ensemble selon l'une des revendications précédentes, **caractérisé en ce que** la fonction préférentielle (FCTi) est une fonction de déclenchement d'une application ou d'une action.

8. Ensemble selon l'une des revendications précédentes, **caractérisé en ce que** le premier protocole de communication (P1) est un protocole choisi dans la liste comprenant les protocoles Bluetooth, GSM, EDGE, UMTS, CDMA, LTE, HSPA, xDSL ou Wi-Fi.

9. Ensemble selon l'une des revendications précédentes, **caractérisé en ce que** le second protocole de communication (P2) est tout protocole apte à être utilisé dans un module de communication passif.

10. Ensemble selon la revendication 9, **caractérisé en ce que** le second protocole (P2) est le protocole NFC.

11. Ensemble selon l'une des revendications précédentes, **caractérisé en ce que** le terminal principal (T1) comprend des moyens d'affichage (12) et des moyens de commande (13) et est un terminal choisi dans la liste suivante : téléphone mobile, ordinateur, tablette électronique ou tout appareil apte à utiliser ledit programme de configuration (PCONF).

12. Ensemble selon l'une des revendications précédentes, **caractérisé en ce que** le terminal secondaire (T2) est un terminal choisi dans la liste comprenant : montre, bracelet, bijou, clip ou autre bracelet.

13. Ensemble selon la revendication 12, **caractérisé en ce que** le terminal secondaire (T2) comprend des moyens d'affichage (27) et des moyens de commande (26).

14. Ensemble selon la revendication 12, **caractérisé en ce que** le terminal opérant la fonction préférentielle (FCTi) peut être tout appareil (40) muni d'un module de communication utilisant le second protocole (P2), ledit module de communication étant interne audit appareil ou externe (41) et connecté audit appareil via une liaison filaire (42).

15. Ensemble selon l'une des revendications précédentes, **caractérisé en ce que** le terminal secondaire et le terminal principal sont du même type de sorte à former un terminal unique, ledit terminal unique comprenant ainsi un module de communication (20) comprenant une interface (24) utilisant au moins le premier protocole (P1) et une interface (23) utilisant le second protocole de communication (P2).

16. Méthode de gestion de fonctions préférentielles d'un ensemble (1) comprenant un terminal principal (10) muni d'un module communication (11), utilisant au moins un premier protocole de communication (P1), apte à connecter ledit terminal principal à un réseau de communication (100) permettant l'utilisation d'au moins une fonction, ledit terminal principal étant agencé pour utiliser au moins un programme de configuration (PCONF), le programme de configuration (PCONF), et un second protocole de communication (P2), ledit ensemble comprenant en outre au moins un terminal secondaire (T2) muni d'un module de communication passif (20) utilisant le second protocole de communication, ladite méthode comprenant les étapes suivantes :
- utiliser le terminal principal pour se connecter au réseau de communication (100) via le programme de configuration (PCONF) ;
- sélectionner au moins une fonction préférentielle via le programme de configuration (PCONF) ;
- générer un code représentatif de la fonction préférentielle sélectionnée (CODEi);
- transférer ce code représentatif de la fonction préférentielle sélectionnée (CODEi) vers la zone mémoire du module de communication du terminal secondaire en utilisant le module de communication actif dudit terminal principal avec le protocole P2.

17. Méthode de gestion de fonctions préférentielles selon la revendication 16, **caractérisée en ce qu'**après le transfert du code représentatif de la fonction préférentielle sélectionnée (CODE1) vers la zone mémoire du circuit de communication du terminal secondaire, ladite méthode comprend en outre l'étape consistant à, lorsque le terminal secondaire est approché d'un terminal muni d'un module de communication actif utilisant le second protocole (P2), envoyer une commande liée à ladite fonction préférentielle de sorte que le terminal recevant cette commande puisse exécuter la fonction.
